# EUROPEAN PATENT SPECIFICATION

(11) **EP 2 597 747 B1**
(45) Date of publication and mention of the grant of the patent: **19.02.2020**
(21) Application number: 11190699.6
(22) Date of filing: 25.11.2011
(51) Int. Cl.: H02J 7/00

(54) **Apparatus, and associated method, for providing charging energy to recharge a portable power supply**
Vorrichtung und zugehörige Verfahren zur Bereitstellung der Ladeenergie zum Laden einer tragbaren Stromversorgung
Appareil et procédé associé pour fournir une énergie de chargement afin de recharger une alimentation portable

(43) Date of publication of application: 29.05.2013
(73) Proprietor: BlackBerry Limited, Waterloo, ON N2K 0A7 (CA)
(72) Inventor: Smith, Michael Gregory, Austin, TX Texas 78734 (US); Deluca, Michael Joseph, Sunrise, FL Florida 33323 (US); Keane, James Abraham, Rolling Meadows, IL Illinois 60008 (US); Geris, Ryan Alexander, Waterloo, Ontario N2L 3W8 (CA); Dill, Scott Leonard, Waterloo, Ontario N2L 3W8 (CA); Chen, Henry Yao-Tsu, Waterloo, Ontario N2L 3W8 (CA); Eaton, Eric Thomas, Sunrise, FL Florida 33323 (US); Bos, Jeffrey Charles, Waterloo, Ontario N2L 3W8 (CA); Veselic, Dusan, Waterloo, Ontario N2L 3W8 (CA)
(74) Representative: Hanna Moore + Curley

(56) References cited:
- US-A1- 2002 113 578
- US-A1- 2003 030 412
- US-A1- 2010 194 335

## Description

The present disclosure relates generally to a manner by which to provide charging energy to a portable power supply that powers a portable electronic device, such as a cellular mobile station or other wireless device. More particularly, the present disclosure relates to an apparatus, and an associated method, by which to recharge the portable power supply of a recipient, portable electronic device with energy stored at a portable power supply with a host, portable electronic device, powered by a host portable power supply.

### Background

Advancements in electronic technologies have resulted in the development of many varied, portable electronic devices, providing many varied functionalities. Examples of portable electronic devices include portable communication devices (such as cellular phones or smart phones), music or media players, remote controls, electronic navigation devices (such as Global Positioning System devices), personal digital assistant (PDAs) or portable computers (such as tablet computers or laptop computers). Devices providing new types of functionalities as well as devices of increased portability resulting from circuit miniaturization are permitted as a result of such advancements. Some of these portable electronic devices may be handheld, that is, sized and shaped to be held or carried in a human hand.

A portable electronic device is typically powered by a portable power supply, such as a battery power supply. The portable power supply is carried together with the portable electronic device, and energy stored at the portable power supply is used when the portable electronic device is operated.

A portable power supply is capable of storing only a limited amount of energy. When the stored energy is depleted beneath a level needed to operate the device, the portable power supply must be replaced with a portable power supply with an acceptable amount of stored energy. Some portable power supplies permit recharging, to replenish the portable power supply with energy. Patent disclosure documents US 2002/113578 and US 2003/030412 disclose devices that are powered by portable power supplies that need to be recharged to replenish the supplies with energy.

The depletion of the stored energy beneath an acceptable level might, however, occur at an inopportune time. The portable power supply might, e.g., become depleted beneath the acceptable level at a time when a user of the portable electronic device is unable to provide for recharging of the portable power supply. Without an appropriate level of energy available to power the portable electronic device, the device might be rendered inoperable.

US 2010/0194335 A1 relates to exemplary embodiments directed to wireless power. A wireless charging device may comprise a charging region configured for placement of one or more chargeable devices. The charging device may further include at least one transmit antenna configured for transmitting wireless power within the charging region. Furthermore, the charging device is configured to exchange data between at least one chargeable device of one or more chargeable devices.

The present invention is set out in the independent claims, with some optional features set out in the claims dependent thereto.

### Brief Description of the Drawings

Figure 1 illustrates a functional block diagram of an arrangement of a set of portable electronic devices comprising a host, portable electronic device and a recipient, portable electronic device arranged in a configuration in which charging energy is provided by the host, portable electronic device to the recipient, portable electronic device pursuant to operation of an implementation of the present disclosure.
Figures 2-3 illustrate an arrangement, similar to that shown in Figure 1, but representative of another implementation of the present disclosure.
Figure 4 illustrates a functional block diagram of a controller of an exemplary implementation of the present disclosure.
Figure 5 illustrates an exemplary screen display generated pursuant to operation of an implementation of the present disclosure.
Figure 6 illustrates another exemplary screen display generated during operation of an implementation of the present disclosure.
Figure 7 illustrates a process diagram representative of the process of operation of an implementation of the present disclosure.
Figure 8 illustrates a method flow diagram representative of the method of operation of an implementation of the present disclosure.

### Detailed Description

The present disclosure, accordingly, advantageously provides an apparatus, and an associated methodology, by which to provide, that is, to supply, charging energy to a portable power supply that powers a portable electronic device, such as a cellular mobile station or other wireless device.

Through operation of an implementation of the present disclosure, a manner is provided by which to charge the portable power supply of the portable electronic device, with charging energy sourced at a portable power supply of another portable power supply.

Recharging of a depleted, portable power supply of the recipient, portable electronic device is carried out without need to utilize conventional, recharging mechanisms. Availability of access to a fixed power supply, such as a household power outlet from which to obtain charging energy is not needed. Other conventional, recharging mechanisms, such as a self-contained power source, also are not needed.

In one aspect of the present disclosure, the charging energy is provided to the recipient, portable electronic device to recharge a recipient, portable power supply. By providing the charging energy to the recipient, portable power supply, the stored energy of the portable power supply is replenished. Once replenished with the charging energy, the stored energy of the portable power supply can be used to power the recipient, portable electronic device.

In another aspect of the present disclosure, the charging energy is provided by a portable power supply of another, i.e., a host, portable electronic device. The host, portable electronic device comprises, a separate, operating device carried by a user of the first, portable electronic device. Or, the host, portable electronic device comprises a borrowed device, borrowed from another. The depleted, portable power supply of the recipient, portable electronic device is replenished with charging energy without need for the availability of a fixed source of power, such as a power outlet.

In another aspect of the present disclosure, when decision is made to provide charging energy sourced at a host portable power supply of a host, portable electronic device to a depleted, portable power supply of a recipient, portable electronic device, the portable electronic devices are configured together so that the charging energy sourced at the portable power supply of the host device is provided to the depleted supply of the recipient, portable electronic device.

In another aspect of the present disclosure, the devices are coupled in the vampiric configuration. That is to say, the devices are coupled together in a manner such that charging energy of the host portable power supply is provided to the recipient, portable power supply to replenish the stored energy at the recipient, portable power supply. The stored energy of the host portable power supply, is reduced by an amount corresponding to the amount of charging energy provided to the recipient, portable power supply. In this configuration, the host and recipient, portable electronic devices are positioned so that energy of the portable power supply of the host device is provided to charge the portable power supply of the recipient device. In one implementation, a cable, or other physical electrical connector, is positioned to interconnect the devices. In another implementation, the devices are inductively coupled together. When inductively coupled together, the charging energy is provided by the host portable power supply by way of an inductive coupling formed between the respective devices. When an inductive coupling is utilized, a physical connector otherwise needed to physically interconnect the devices is obviated.

In another aspect of the present disclosure, a controller controls application of the charging energy to replenish energy stored at a recipient, portable power supply of the recipient, portable electronic device. The controller controls the commencement of charging operations, the termination of charging operations, and provides for monitoring of the charging operations during its performance. In one implementation, the controller is external to the host and recipient, portable electronic devices. In another implementation, at least part of the functionality of the controller is implemented at one, or both, of the host and recipient, portable electronic devices. In another implementation, the functionality of the controller is implemented entirely at one, or both, of the host and recipient, portable electronic devices.

In another aspect of the present disclosure, the controller causes display upon a display screen of one, or both, of the host and recipient, portable electronic devices. The display screen, in one implementation, is generated and displayed prior to commencement of charging operations. A display screen is generated and displayed, e.g., responsive to detection of a user input to elect initiation of charging operations. Or, the display screen is caused to be generated and displayed responsive to detection at the host or recipient, portable electronic device of the arrangement of the portable electronic device in the charging configuration. The screen display includes display, for instance, of user-selectable constraints on charging operations. The controller is further, for instance, configured to detect additional input commands or selections made responsive to the display on the display screen.

In another aspect of the present disclosure, displays generated and displayed during charging operations include display of information relating to the status of the charging operations. The status information includes, for instance, the charge status of the host portable power supply and/or the charge status of the recipient, portable power supply. The information further, or alternately, includes, for instance, the remaining, stored charge at the portable power supply of the host device and the charge level of the portable power supply of the recipient device. In one implementation, a user of either of the host or recipient portable electronic devices is provided with an option to terminate, at any time, the charging operations.

In another aspect of the present disclosure, at least a portion of the controller is included as part of one, or both, of the host and recipient, portable electronic devices. The controller includes, for instance, processing circuitry, and program code is executed thereat to facilitate the charging operations.

In an alternate implementation, the controller is, at least in part, positioned external to the host and recipient portable electronic devices. Control signals are generated pursuant to control operations and are provided to the host and/or recipient, portable electronic devices.

In these and other aspects, therefore, an apparatus, and an associated method, is provided for providing portable-host-sourced charging energy to a recipient portable power supply of a recipient, portable electronic device. A coupler is configured to couple electrically or inductively the portable power supply of the recipient, portable electronic device to the host source of energy. Electrical coupling means that electrical power from the host may be transferred to the recipient. The transfer of power takes placed via the coupler, which may transfer energy wirelessly, such as inductively, or via a physical link, such as one or more electrical conductors, or a combination thereof. In some embodiments, the coupler is included in the host, portable electronic device, e.g., an inductive coil that can transfer electromagnetic energy inductively to a coil in the recipient device, or a port that can transfer energy via an attachable electrical cable or other conductor. In other embodiments, the coupler is a distinct physical element that may be readily electrically coupled to, and uncoupled from, usually without need of tools, the host and recipient devices. For convenience, any arrangement wherein energy is transferred from a host portable electronic device to recipient portable electronic device may be referred to as a vampiric-coupled configuration of devices. A controller is configured to control application of the portable-host-sourced charging energy responsive to indicia of a level of the portable-host-sourced charging energy. In some embodiments, the controller may be disposed in the host device and may be, for example, a multiprocessor that controls the operation of the host device, but the controller may also be disposed elsewhere, such as in a coupler that serves as a physical and electrical link between the host and recipient devices.

In these and other aspects, further apparatus, and an associated method, is provided for a host, portable electronic device powered by a host portable power supply to provide charging energy to a recipient portable power supply of a recipient portable electronic device. A coupler is configured to couple the portable power supply of the host, portable electronic device to provide the charging energy. A controller is configured to control the charging energy provided by the coupler responsive to an indicia of a level of the charging energy.

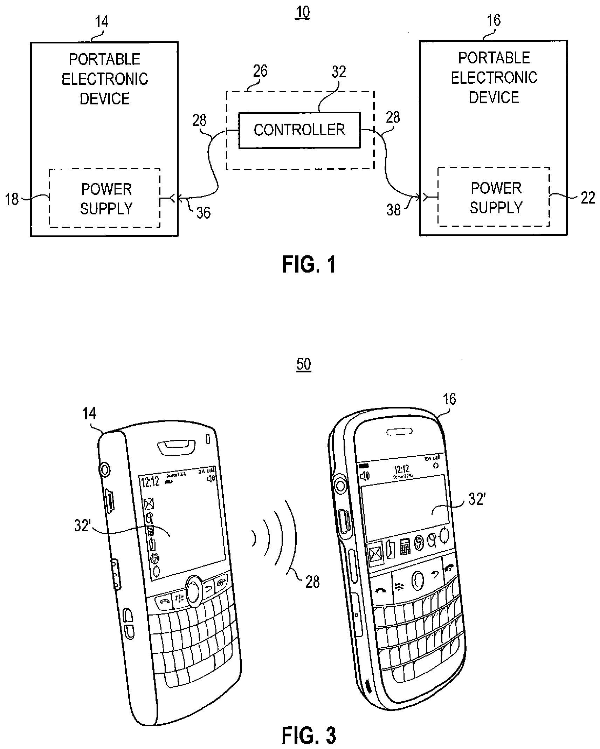

Referring first to Figure 1, an arrangement, shown generally at 10, comprises a set of portable electronic devices, here wireless devices 14 and 16, such as cellular mobile stations operable in a cellular communication system. The devices 14 and 16 are each powered by portable power supplies. The device 14 is powered by a portable power supply 18, and the device 16 is powered by a portable power supply 22. In this illustrative apparatus, the power supplies 18 and 22 are each comprised of one or more battery cells. In the exemplary implementation, the devices 14 and 16 are of similar device-types. In other implementations, the devices 14 and 16 are of different device-types.

The portable power supplies store energy that is used to power the circuitry of the respective devices 14 and 16. Powering of the devices 14 and 16 by their respective portable power supplies depletes the remaining energy stored at the respective power supplies. When a power supply is depleted of stored energy beneath a minimum amount needed to operate its associated device, the device can no longer be operated. The depleted, portable power supply must be replaced with a substitute power supply, or the portable power supply must be recharged with charging energy at least to a level to permit the portable electronic device to be operated.

The arrangement 10 shown in Figure 1 of the set of devices 14 and 16 provides for the replenishment of energy of the portable power supply of one of the portable electronic devices with stored energy of the portable power supply of another of the portable electronic devices. Here, for purposes of example, the portable power supply 18 forms a host portable power supply, and the portable electronic device 14 forms a host, portable electronic device. The portable power supply 22 comprises a recipient, portable power supply that receives charging energy sourced by the host portable power supply 18. The portable electronic device 16 forms a recipient, portable electronic device.

The arrangement 10 further includes an apparatus 26 of an implementation of the present disclosure. The apparatus functions to couple the host portable power supply 18 to the recipient, portable power supply 22 to provide for the transfer of stored energy of the host portable power supply as charging energy to replenish the energy stored at the recipient, portable power supply 22. The apparatus 26 is here shown to include a coupler 28 and a controller 32. In the exemplary representation shown in Figure 1, the coupler 28 comprises a physical connector, such as a cable, or the like, and the controller 32 is positioned in-line, i.e., in series, with the connector.

The controller 32 operates, amongst other things, to control the initiation of charging operations and to control the charging operations and the termination of the charging operations. Once the apparatus 26 is positioned to couple together the devices 14 and 16, the controller 32 is placed in connectivity with both of the devices 14 and 16. In the implementation shown in Figure 1 in which the coupler 28 forms a physical connector, the controller 32 is placed in the communication connectivity with the devices 14 and 16 by way of connection of the coupler 28 at the plugged connections 36 and 38, respectively. In the exemplary implementation, the plugged connections are made at charger ports of the respective devices.

Once the devices are arranged and the controller is placed in the communication connectivity with the respective devices, a user of the devices is able to elect commencement of charging operations by which to provide charging energy sourced at the power supply 18 to the power supply 22. The election to commence operations is made, e.g., by a user through actuation of an appropriate input actuator of a user interface of the host device 14.

Upon such arrangement of the devices in the illustrated configuration and election to commence charging operations, the controller causes displays to be displayed at the output display screens of the respective devices 14 and 16 and also causes commencement of operational control of charging of the recipient, portable power supply. Operational control, in the exemplary implantation, provides for selection of which of the devices is to comprise the host device and which of the devices is to comprise the recipient device, to provide for selection of the charge levels of the respective portable power supplies, charging status, and to provide any appropriate information of interest to a user.

The stored charge indications identify, e.g., a minimum level of charge energy to which the host portable power supply can be depleted, beyond which charge operations are prohibited. This minimum charge value is, in one implementation, user selectable. The controller also, e.g., causes display of the amount of energy stored at the power supplies of the respective devices, detect user input relating to host-device and recipient-device selection, selection of minimum charging levels of the host portable power supply of the host device, selection of a maximum amount of charging energy permitted to be delivered to the recipient, portable power supply of the recipient device, and user-selected decrements and increments to the maximum and minimum charge amounts. The controller further controls and manages charge transfer operations and causes generation of user notifications and alerts of charge-operation events, e.g., when the recipient, portable power supply is fully recharged or when the host portable power supply is depleted of stored energy to the minimum-permitted charge storage amount.

In one implementation, the controller controls the rate at which charging energy is applied to the recipient, portable power supply. The rate selected by the controller is, e.g., responsive to a request for a designated charging-energy-application (i.e., charging) rate. The request, generated at the recipient, portable electronic device 16, or elsewhere, is provided to the controller. And, the controller selects the charging rate in response, inter alia, the request. The charging rate is selected, e.g., to be of a level that permits a specific function to be performed at the recipient, portable electronic device with the charging energy, while the charging energy is applied. For example, if the recipient, portable electronic device 16 comprises a wireless device capable of telephonic communication, the charging rate is selected to be great enough to permit operation to perform the telephonic communication with the charging energy while the charging energy is applied to the device 16.

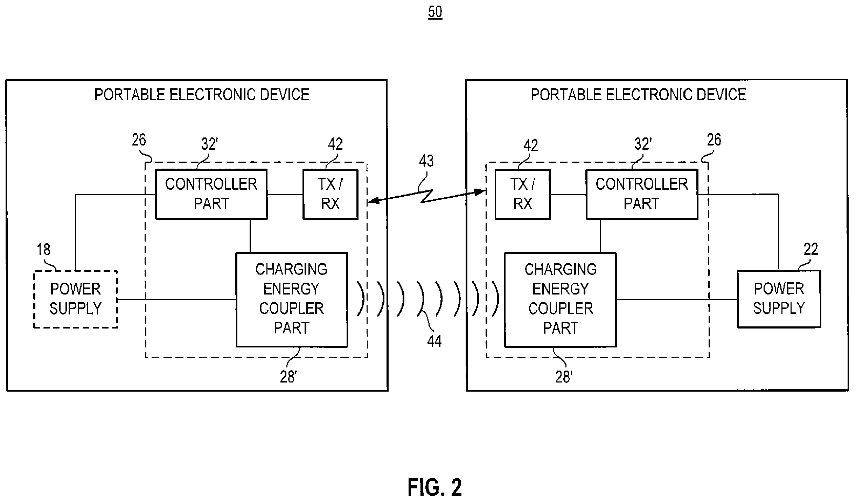

Figure 2 illustrates an arrangement 50 of an alternate implementation of the present disclosure. The arrangement 50 again shows portable electronic devices 14 and 16. The portable electronic device 14 is powered by a portable power supply 18, and the portable electronic device 16 is powered by a portable power supply 22. In this implementation, the apparatus 26 is embodied at the devices 14 and 16. Operation of the apparatus 26 provides for charging energy, sourced at a host portable power supply, to charge a recipient, portable power supply. Here, again, for purposes of an example, the portable power supply 18 is selected to be the host portable power supply, and the portable power supply 22 is selected to be the recipient, portable power supply. Charging energy is provided by way of a contactless connection.

In this implementation, the controller 32 is formed of parts 32' embodied at each of the portable electronic devices 14 and 16. The parts 32' of the controller embodied at the separate devices communicate by way of radio signals generated by transceivers 42 embodied at the respective devices 14 and 16. In one implementation, the radio transceivers 42 are operable pursuant to a Bluetooth™ protocol. Commands and other information generated by the parts 32' are provided to an associated transceiver 42 by way of a radio link 43, and commands and other information received at a transceiver 42 are provided to an associated part 32' of the controller by way of the radio link 43.

The coupler is formed of parts 28' embodied at the devices 14 and 16. The parts 28' provide for inductive, or other, transfer of energy between the devices 14 and 16. In the example in which the device 14 forms the host, portable electronic device and the device 16 forms the recipient, portable electronic device, the part 28' of the coupler embodied at the device 14 provides energy sourced at the portable power supply 18 to the part 28' of the coupler embodied at the recipient, portable electronic device 16.

Figure 3 also illustrates the arrangement 50. In this implementation, the parts 32' of the controller are embodied at the portable electronic devices 14 and 16. And, parts 28' of the coupler are embodied at the portable electronic devices 14 and 16. Because the parts 28' of the coupler provide an inductive connection between the devices 14 and 16, a physical coupler is not required.

In the exemplary implementation of the apparatus 26 shown in Figures 2-3, the parts 32' of the controller, and the controller functionality provided therefrom, are embodied at each of the devices 14 and 16. The control functionality embodied at the host portable electronic device 14 provides at least for control functions associated with the portable power supply 18. Analogously, the control functionality of the part 32' embodied at the portable electronic device 16 provides at least the control functions associated with operation of the device as a recipient device to receive charging energy.

The exemplary implementations described above represent the device 14 to be a host, portable electronic device and the device 16 to be a recipient, portable device. However, in the exemplary implementation, the functionality of the controller permits either of the portable electronic devices 14 or 16 to be the host, portable electronic device. In the exemplary implementation shown in Figure 1, the controller 32 controls selection of which of the devices 14 and 16 forms the host, portable electronic device and which of the devices 14 and 16 forms the recipient, portable electronic device. Analogously, in the implementation shown in Figures 2-3 the parts 32' control selection of which of the devices 14 and 16 forms the host, portable electronic device and which of the devices 14 and 16 forms the recipient, portable electronic device. The controller 32 or parts 32' further control the charging of the portable power supply of the recipient, portable electronic device.

In exemplary operation in which the device 14 forms the host device and the device 16 forms the recipient device, the controller part 32' embodied at the host device 14 senses when the recipient device 16 is arranged to receive charging energy from the portable power supply 18 of the host device 14. A screen display is caused to be displayed at the host device 14 to prompt the user thereof to select a minimum charge level beneath which the charging operations shall not deplete the host portable power supply 18. Thereby, by providing for a minimum charge level, the portable power supply of the host device 14 is not depleted beneath a minimum level. The controller part 32' also causes the stored energy level of the host portable power supply 18 to be monitored to ensure that the stored energy of the host portable power supply is not depleted beneath the minimum level. In the event that the stored energy level of the host portable power supply falls to a minimum permitted level, the controller causes charging operations to be terminated. The controller part 32' also disables reverse-charge circuitry to prevent charging of the host portable power supply with the energy of the recipient, portable power supply. Operation of the controller 32 in the implementation shown in Figure 1 is analogous.

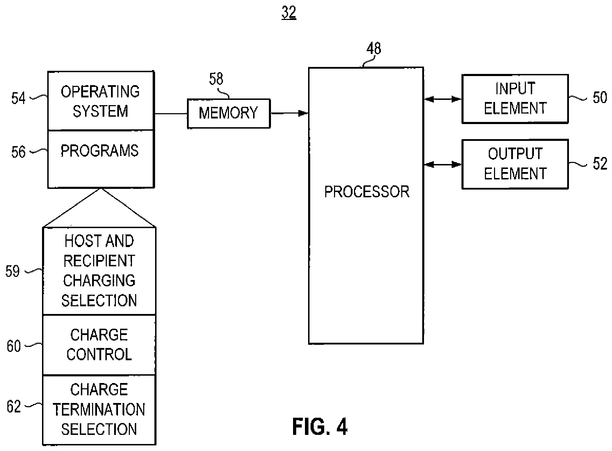

Figure 4 illustrates an exemplary implementation of the controller 32 of the apparatus 26 shown in Figure 1. The controller 32 includes a processor 48 that controls charging of the recipient, portable power supply of a recipient, portable electronic device with charging energy sourced at a host portable power supply of a host, portable electronic device. The processor is configured to receive input information and commands by way of an input element 50. Inputs include, for instance, user-entered instructions and commands and information provided by one or more of the devices 14 and 16. Outputs generated during operation of the processor 48 are provided to an output element 52. Outputs generated by the processor include control commands and information indicative of charging operations.

The controller 32 further includes an operating system 54 and software programs 56 formed of program code that is executable by the processor 48. The operating system 54 and the software programs 56 are stored, for example, at a persistent, updatable store, such as the memory 58.

The software programs 56 include software modules, here including a host and recipient charging selection module 59, a charge control module 60, and a charge termination selection module 62. At commencement of charging operations, the module 59 is invoked to select charging parameters of the charging operation. The charging parameters include, for instance, selection of the host and recipient devices and charging parameters of the charging operations. The module 60 controls the charging of the recipient, portable power supply within the constraints imposed by the charging parameters selected during operation of the module 59. The module 62 controls charge termination, such as when the recipient, portable power supply is charged to an acceptable level or when the host portable power supply is depleted to a minimum, allowable level.

In an alternate implementation, such as the implementation shown in Figures 2-3, the parts 32' are implemented in a manner analogous to the implementation shown in Figure 4 wherein program code is executed by processors embodied at the respective devices 14 and 16.

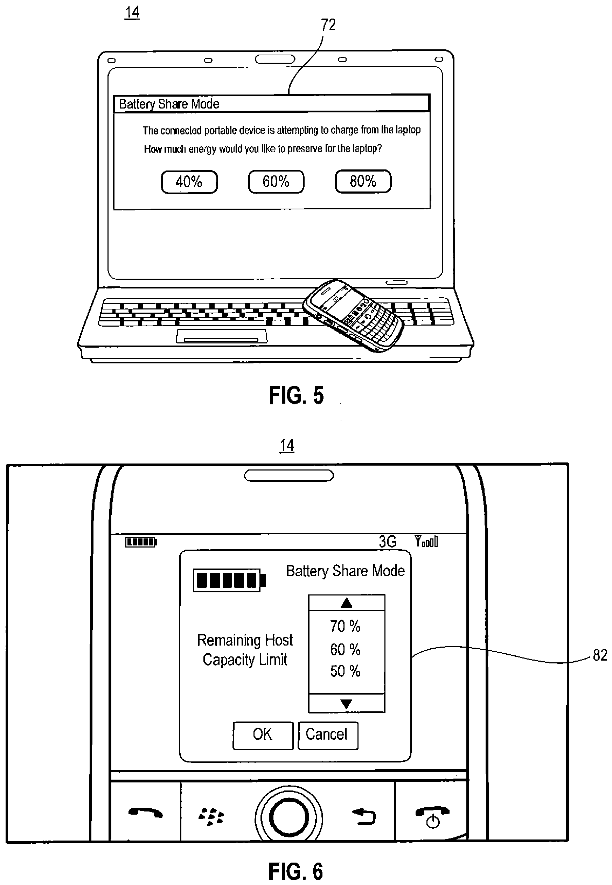

Figure 5 illustrates an exemplary screen display generated at the host, portable electronic device 14 pursuant to operation of an implementation of the present disclosure. In this illustration, the host, portable electronic device 14 comprises a laptop computer. As mentioned previously, however, the host device comprises any of various different portable electronic devices that contain a portable power supply. Here, the screen display 72 identifies entry of the device into a battery-share mode. And, a user of the host device 14 is prompted to select a minimum charge amount, in terms of power-supply capacity, that shall be maintained at the host device. By maintaining a higher minimum level, the usability of the device is potentially lengthened.

Figure 6 illustrates an alternate, exemplary screen display 82 also generated at a host, portable electronic device 14. Here, the host device 14 comprises a wireless device, such as a cellular mobile station. In this exemplary display, the device is also indicated to be in a battery share mode, and the user of the device is prompted to select the minimum stored energy level beneath which transfer of charge energy pursuant to a charging operation is not permitted. The user is prompted to select the minimum stored energy level, here in terms of percent remaining capacity of the host portable power supply. A user is prompted, in this exemplary implementation, to make the selection and to enter the selection by actuating an okay icon or a cancel icon to cancel the selection. Additional screen displays provide, e.g., for the generation of a request for application of a charging energy at a selected rate.

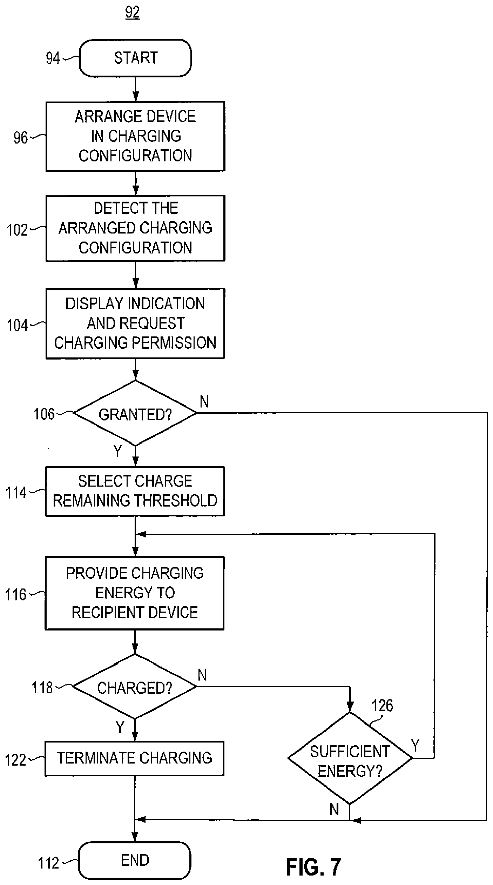

Figure 7 illustrates a process diagram 92 representative of an exemplary process of operation of an implementation of the present disclosure. The process facilitates providing charging energy sourced at a host portable power supply of a host, portable electronic device for application to a recipient, portable power supply of a recipient, portable electronic device.

First, after entry, indicated by the start block 94, the portable electronic devices are arranged in a charging configuration, as indicated by the block 96, to provide charging energy to a portable power supply of one of the devices. Then, and as indicated by the block 102, detection is made, here at the portable electronic device designated as the host device, of the arranged configuration.

Upon detection of the charging configuration of the portable electronic devices, a display is generated, indicated at the block 104, to alert a user of the detected configuration and to request grant of permission to proceed with the charging operation. Then, and as indicated by the decision block 106, a determination is made as to whether permission is granted to continue with the charging operation. If not, the no branch is taken to the end block 112. If, conversely, permission to proceed as granted, the yes branch is taken to the block 108, and a minimum charge-remaining threshold is selected. Then, and as indicated by the block 116, charging energy is provided by the host portable power supply to the recipient portable power supply.

Thereafter, a decision is made, indicated by the decision block 118, as to whether the recipient portable power supply has been fully charged, such as through receipt of an indication thereof. If so, the yes branch is taken to the block 122, and application of charging energy is terminated. A branch is then taken to the end block 112. If, conversely, the recipient portable power supply has not been fully charged, the no branch is taken to the decision block 126 and a further decision is made as to whether the remaining charge energy at the host portable power supply is sufficient to permit continued charging. If so, the yes branch is taken back to the block 116. If charge has been depleted to the minimum level, the no branch is taken to the block 122, charge operations are terminated, and a branch is taken to the end block.

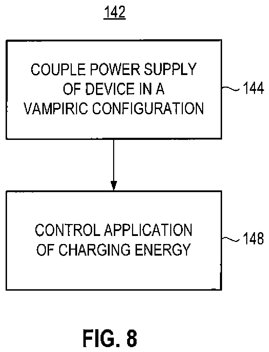

Figure 8 illustrates a method flow diagram, shown generally at 142, representative of the method of operation of an implementation of the present disclosure. The method provides portable-host-sourced charging energy to a portable power supply of a first portable electronic device. First, and as indicated by the block 144, a portable power supply of the first portable electronic device is coupled in a charging configuration. Then, and as indicated by the block 148, application of the portable-host-sourced charging energy is controlled responsive to an indicia of a level of the portable-host-sourced charging energy.

Thereby, a manner is provided by which to provide charging energy to a portable power supply of a portable electronic device, such as a wireless device, with charging energy sourced at another portable electronic device. In the event that a user of the portable electronic device is unable to access another charge energy replacement source, charge energy is provided by the portable power supply of another portable electronic device.

Presently preferred implementations of the disclosure and many of its improvements and advantages have been described with a degree of particularity. The description is of preferred examples of implementing the disclosure and the description of preferred examples is not necessarily intended to limit the scope of the disclosure. The scope of the disclosure is defined by the following claims.

## Claims

1. An apparatus comprising:
a coupler (28) configured to electrically couple a host portable power supply (18) of a host portable electronic device to a recipient portable power supply (22) of a recipient portable electronic device;
an input element (50);
a display device; and,
a controller (32) configured to: render, at the display device, a plurality of selectable prompts, each of the plurality of selectable prompts corresponding to respective given selectable minimum charge levels; receive a selected minimum charge level from the input element when one of the plurality of selectable prompts is selected using the input element; control application of the charging energy sourced at the host portable power supply to the recipient portable power supply by way of said coupler; control application of the charging energy sourced at the host portable power supply to the recipient portable power supply by way of said coupler, and, during application of the charging energy, determine whether remaining charge energy at the host portable power supply is sufficient to permit continued charging; when the remaining charge energy at the host portable supply is insufficient to permit continued charging, terminate charging and otherwise terminate the charging when the host portable power supply is depleted to the selected minimum charge level.

2. The apparatus of claim 1 wherein said coupler comprises an electrical connector that is physically couples the host portable power supply to the recipient portable power supply.

3. The apparatus of claims 1 or 2 wherein at least a portion of said coupler is embodied at the host portable electronic device.

4. The apparatus of any one of claims 1 - 3 wherein at least a portion of said controller is embodied at the host portable electronic device.

5. The apparatus of any one of claims 1 - 4 wherein said coupler comprises an inductive coupler configured to inductively couple the host portable power supply to the recipient portable power supply.

6. The apparatus of any one of claims 1 - 5 wherein at least a portion of said coupler is embodied at the recipient portable electronic device.

7. The apparatus of any one of claims 1 - 6 wherein at least a portion of said controller is embodied at the recipient portable electronic device.

8. A method for providing charging energy to a recipient portable power supply of a recipient portable electronic device, said method comprising:
coupling the recipient portable power supply of the recipient portable electronic device in a charge-receiving configuration to receive charging energy of a host portable power supply of a host portable electronic device;
rendering, at a display device of the host portable electronic device, a plurality of selectable prompts, each of the plurality of selectable prompts corresponding to respective given selectable minimum charge levels;
receiving a selected minimum charge level from an input element when one of the plurality of selectable prompts is selected using the input element; and
controlling application of the charging energy by way of a coupling between the recipient portable power supply and the host portable power supply formed during said coupling, and during application of the charging energy, determining whether remaining charge energy at the host portable power supply is sufficient to permit continued charging, when the remaining charge energy at the host portable power supply is insufficient to permit continued charging, terminate charging and otherwise terminating the charging when the host portable power supply is depleted to the selected minimum charge level.

9. The method of claim 8 wherein said coupling comprises inductively coupling the recipient portable power supply of the recipient portable electronic device to a portable power supply of the host portable power supply of the host portable electronic device.

## Patentansprüche

1. Vorrichtung, umfassend:
einen Koppler (28), der ausgelegt ist, eine tragbare Hostenergieversorgung (18) einer tragbaren elektronischen Hosteinrichtung an eine tragbare Abnahmeenergieversorgung (22) einer tragbaren elektronischen Abnahmeeinrichtung zu koppeln;
ein Eingabeelement (50);
eine Anzeigeeinrichtung; und
eine Steuerung (32), die ausgelegt ist: an der Anzeigeeinrichtung eine Vielzahl von auswählbaren Eingabeaufforderungen darzustellen, wobei jede der Vielzahl von auswählbaren Eingabeaufforderungen einem jeweiligen bestimmten auswählbaren minimalen Ladezustand entspricht;
einen ausgewählten minimalen Ladezustand vom Eingabeelement zu empfangen, wenn eine der Vielzahl von auswählbaren Eingabeaufforderungen unter Verwendung des Eingabeelements ausgewählt wird; ein Anlegen der Ladeenergie, die aus der tragbaren Hostenergieversorgung bezogen wird, an die tragbare Abnahmeenergieversorgung mithilfe des Kopplers zu steuern; ein Anlegen der Ladeenergie, die von der tragbaren Hostenergieversorgung bezogen wird, an die tragbare Abnahmeenergieversorgung mithilfe des Kopplers zu steuern und während des Anlegens der Ladeenergie zu ermitteln, ob eine verbleibende Ladeenergie an der tragbaren Hostenergieversorgung ausreicht, um ein fortlaufendes Laden zu ermöglichen; wenn die verbleibende Ladeenergie an der tragbaren Hostversorgung unzureichend ist, um ein fortlaufendes Laden zu ermöglichen, das Laden zu beenden und andernfalls das Laden zu beenden, wenn die tragbare Hostenergieversorgung bis zum ausgewählten minimalen Ladezustand geleert ist.

2. Vorrichtung nach Anspruch 1, wobei der Koppler ein elektrisches Verbindungsstück umfasst, das die tragbare Hostenergieversorgung physisch an die tragbare Abnahmeenergievorrichtung koppelt.

3. Vorrichtung nach Anspruch 1 oder 2, wobei zumindest ein Abschnitt des Kopplers an der tragbaren Hostenergieversorgung ausgebildet ist.

4. Vorrichtung nach einem der Ansprüche 1-3, wobei zumindest ein Abschnitt der Steuerung an der tragbaren Hostenergieversorgung ausgebildet ist.

5. Vorrichtung nach einem der Ansprüche 1-4, wobei der Koppler einen induktiven Koppler umfasst, der ausgelegt ist, die tragbare Hostenergieversorgung induktiv an die tragbare Abnahmeenergieversorgung zu koppeln.

6. nach einem der Ansprüche 1-5, wobei zumindest ein Abschnitt des Kopplers an der tragbaren Abnahmeenergieversorgung ausgebildet ist.

7. Vorrichtung nach einem der Ansprüche 1-6, wobei zumindest ein Abschnitt der Steuerung an der tragbaren Abnahmeenergieversorgung ausgebildet ist.

8. Verfahren zum Bereitstellen von Ladeenergie an eine tragbare Abnahmeenergieversorgung einer tragbaren elektronischen Abnahmeeinrichtung, wobei das Verfahren umfasst:
Koppeln der tragbaren Abnahmeenergieversorgung der tragbaren elektronischen Abnahmeeinrichtung in eine Ladeaufnahmekonfiguration, um Ladeenergie von einer tragbaren Hostenergieversorgung einer tragbaren elektronischen Hosteinrichtung aufzunehmen;
Darstellen, an der Anzeigeeinrichtung der tragbaren elektronischen Hosteinrichtung, einer Vielzahl von auswählbaren Eingabeaufforderungen, wobei jede der Vielzahl von auswählbaren Eingabeaufforderungen einem jeweiligen bestimmten auswählbaren minimalen Ladezustand entspricht;
Empfangen eines ausgewählten minimalen Ladezustands von einem Eingabeelement, wenn eine der Vielzahl von auswählbaren Eingabeaufforderungen unter Verwendung des Eingabeelements ausgewählt wird; und
Steuern eines Anlegens der Ladeenergie mittels einer Kopplung zwischen der tragbaren Abnahmeenergieversorgung und der tragbaren Hostenergieversorgung, die während des Koppelns gebildet wird, und während des Anlegens der Ladeenergie, Ermitteln, ob eine verbleibende Ladeenergie an der tragbaren Hostenergieversorgung ausreicht, um ein fortlaufendes Laden zu ermöglichen, wenn die verbleibende Ladeenergie an der tragbaren Hostenergieversorgung unzureichend ist, um ein fortlaufendes Laden zu ermöglichen, Beenden des Ladens und andernfalls Beenden des Ladens, wenn die tragbare Hostenergieversorgung bis zum ausgewählten minimalen Ladezustand geleert ist.

9. Verfahren nach Anspruch 8, wobei das Koppeln ein induktives Koppeln der tragbaren Abnahmeenergieversorgung der tragbaren elektronischen Abnahmeeinrichtung an eine tragbare Energieversorgung der tragbaren Hostenergieversorgung der tragbaren elektronischen Hosteinrichtung umfasst.

## Revendications

1. Appareil comprenant :
un coupleur (28) configuré pour coupler électriquement une alimentation électrique portable hôte (18) d'un dispositif électronique portable hôte à une alimentation électrique portable destinataire (22) d'un dispositif électronique portable destinataire ;
un élément d'entrée (50) ;
un dispositif d'affichage ; et,
un dispositif de commande (32) configuré pour : rendre, au niveau du dispositif d'affichage, une pluralité d'invites sélectionnables, chacune de la pluralité d'invites sélectionnables correspondant à des niveaux de charge minimale sélectionnables donnés respectifs ; recevoir un niveau de charge minimale sélectionné à partir de l'élément d'entrée lorsque l'une de la pluralité d'invites sélectionnables est sélectionnée en utilisant l'élément d'entrée ; commander l'application de l'énergie de charge obtenue au niveau de l'alimentation électrique portable hôte à l'alimentation électrique portable destinataire au moyen dudit coupleur ; commander l'application de l'énergie de charge obtenue au niveau de l'alimentation électrique portable hôte à l'alimentation électrique portable destinataire au moyen dudit coupleur, et, pendant l'application de l'énergie de charge, déterminer si l'énergie de charge restante au niveau de l'alimentation électrique portable hôte est ou non suffisante pour permettre de continuer la charge ; lorsque l'énergie de charge restante au niveau de l'alimentation portable hôte est insuffisante pour permettre de continuer la charge, mettre fin à la charge et autrement mettre fin à la charge lorsque l'alimentation électrique portable hôte est réduite au niveau de charge minimale sélectionné.

2. Appareil selon la revendication 1, dans lequel ledit coupleur comprend un connecteur électrique qui couple physiquement l'alimentation électrique portable hôte à l'alimentation électrique portable destinataire.

3. Appareil selon la revendication 1 ou 2, dans lequel au moins une partie dudit coupleur est intégrée au niveau du dispositif électronique portable hôte.

4. Appareil selon l'une quelconque des revendications 1 à 3, dans lequel au moins une partie dudit dispositif de commande est intégrée au niveau du dispositif électronique portable hôte.

5. Appareil selon l'une quelconque des revendications 1 à 4, dans lequel ledit coupleur comprend un coupleur inductif configuré pour coupler de manière inductive l'alimentation électrique portable hôte à l'alimentation électrique portable destinataire.

6. Appareil selon l'une quelconque des revendications 1 à 5, dans lequel au moins une partie dudit coupleur est intégrée au niveau du dispositif électronique portable destinataire.

7. Appareil selon l'une quelconque des revendications 1 à 6, dans lequel au moins une partie dudit dispositif de commande est intégrée au niveau du dispositif électronique portable destinataire.

8. Procédé de fourniture d'une énergie de charge à une alimentation électrique portable destinataire d'un dispositif électronique portable destinataire, ledit procédé comprenant :
coupler l'alimentation électrique portable destinataire du dispositif électronique portable destinataire dans une configuration de réception de charge pour recevoir une énergie de charge d'une alimentation électrique portable hôte d'un dispositif électronique portable hôte ;
rendre, au niveau d'un dispositif d'affichage du dispositif électronique portable hôte, une pluralité d'invites sélectionnables, chacune de la pluralité d'invites sélectionnables correspondant à des niveaux de charge minimale sélectionnables donnés respectifs ;
recevoir un niveau de charge minimale sélectionné à partir d'un élément d'entrée lorsque l'une de la pluralité d'invites sélectionnables est sélectionnée en utilisant l'élément d'entrée ; et
commander l'application de l'énergie de charge au moyen d'un couplage entre l'alimentation électrique portable destinataire et l'alimentation électrique portable hôte formée pendant ledit couplage, et pendant l'application de l'énergie de charge, déterminer si l'énergie de charge restante au niveau de l'alimentation électrique portable hôte est ou non suffisante pour permettre de continuer la charge, lorsque l'énergie de charge restante au niveau de l'alimentation électrique portable hôte est insuffisante pour permettre de continuer la charge, mettre fin à la charge et autrement mettre fin à la charge lorsque l'alimentation électrique portable hôte est réduite au niveau de charge minimale sélectionné.

9. Procédé selon la revendication 8, dans lequel ledit couplage comprend le couplage inductif de l'alimentation électrique portable destinataire du dispositif électronique portable destinataire à une alimentation électrique portable de l'alimentation électrique portable hôte du dispositif électronique portable hôte.
